# FASCICULE DE BREVET EUROPEEN

(11) **EP 2 303 786 B1**
(45) Date de publication et mention de la délivrance du brevet: **12.04.2017**
(21) Numéro de dépôt: 09802505.9
(22) Date de dépôt: 28.07.2009
(51) Int. Cl.: C03B 5/06, B09B 3/00

(54) **PROCÉDÉ DE CONFINEMENT DE DÉCHETS PAR VITRIFICATION EN POTS MÉTALLIQUES**
VERFAHREN ZUR VERFEINERUNG VON ABFALL DURCH VERGLASUNG IN METALLTÖPFEN
METHOD FOR CONFINING WASTE BY VITRIFICATION IN METAL POTS

(30) Priorité: 28.07.2008 FR 0855168
(43) Date de publication de la demande: 06.04.2011
(73) Titulaire: COMMISSARIAT À L'ÉNERGIE ATOMIQUE ET AUX ÉNERGIES ALTERNATIVES, 75015 Paris (FR)
(72) Inventeur: GRUBER, Philippe, F-30400 Villeneuve Les Avignon (FR); PINET, Olivier, F-30320 Poulx (FR); RABILLER, Hélène, F-31300 Toulouse (FR); BOEN, Roger, F-30130 Saint-Alexandre (FR); BOUSQUET, Nicolas, F-30250 Villevieille (FR); DUSSOSSOY, Jean-Luc, F-34830 Jacou (FR); LACOMBE, Jacques, F-30131 Pujaut (FR)
(74) Mandataire: Ilgart, Jean-Christophe
(86) Numéro de dépôt international: PCT/EP2009/059735
(87) Numéro de publication internationale: WO 2010/012726

(56) Documents cités:
- FR-A- 2 888 576
- US-A- 3 365 578
- US-A- 5 421 275
- DATABASE COMPENDEX [Online] ENGINEERING INFORMATION, INC., NEW YORK, NY, US; 2006, WANG X-T ET AL: "Influence of atmospheres on behavior of heavy metals during melting process of fly ashes from municipal solid waste incinerator" XP002518566 Database accession no. E2006249929848 & ZHONGGUO DIANJI GONGCHENG XUEBAO/PROCEEDINGS OF THE CHINESE SOCIETY OF ELECTRICAL ENGINEERING 20060401 CHINESE SOCIETY OF ELECTRICAL ENGINEERING CN, vol. 26, no. 7, 1 avril 2006 (2006-04-01), pages 47-52,
- CASSINGHAM N J ET AL: "Property modification of a high level nuclear waste borosilicate glass through the addition of Fe2O3", GLASS TECHNOLOGY: EUROPEAN JOURNAL OF GLASS SCIENCE & TECHNOLOGY PART A, SOCIETY OF GLASS TECHNOLOGY, SHEFFIELD, GB, vol. 49, no. 1, 1 February 2008 (2008-02-01), pages 21-26, XP001516941, ISSN: 1753-3546
- SCHREIBER H D ET AL: "Redox chemistry in candidate glasses for nuclear waste immobilization", JOURNAL OF THE AMERICAN CERAMIC SOCIETY, BLACKWELL PUBLISHING, MALDEN, MA, US, vol. 70, no. 8, 1 January 1987 (1987-01-01), pages 591-594, XP002376769, ISSN: 0002-7820, DOI: 10.1111/J.1151-2916.1987.TB05712.X
- JOUAN A ET AL: "La vitrification continue des solutions concentrees de produits de fission", ANNALS OF NUCLEAR ENERGY, PERGAMON PRESS, OXFORD, GB, vol. 3, no. 5-6, 1 January 1976 (1976-01-01), pages 275-278,IN3, XP025417885, ISSN: 0306-4549, DOI: 10.1016/0306-4549(76)90054-2 [retrieved on 1976-01-01]

## Description

### DOMAINE TECHNIQUE

L'invention concerne un procédé de confinement de déchets par vitrification dans un pot métallique.

Plus précisément le procédé de l'invention est une amélioration aux procédés de confinement des déchets par vitrification qui utilisent un pot métallique chaud comme creuset d'élaboration.

Le domaine technique de l'invention peut ainsi être défini, de manière générale, comme celui du traitement des déchets, effluents, par confinement, enrobage ou immobilisation.

Plus particulièrement, le domaine technique de l'invention est celui du confinement de déchets par vitrification et plus précisément par vitrification en pot métallique chaud.

Ces déchets peuvent être des déchets solides ou liquides se présentant notamment sous la forme de solutions.

Il peut s'agir de déchets nucléaires, mais aussi de tout déchet industriel ou ménager qui contient des espèces minérales, en particulier des métaux polluants et/ou des ions métalliques polluants.

Parmi ces déchets on peut citer par exemple les résidus solides provenant de l'incinération des ordures ménagères, en particulier les résidus constitués par les cendres de chaudières, les cendres « volantes », et les gâteaux de filtration provenant de la neutralisation et du traitement des fumées d'incinération.

Dans les procédés de vitrification utilisant un pot métallique chaud, les déchets et des adjuvants de vitrification sont introduits dans un pot métallique porté à haute température pour que se produisent les réactions de décomposition des déchets et l'incorporation des minéraux des déchets tels que les éléments chimiquement toxiques ou les espèces radioactives, dans un réseau vitreux.

Selon le procédé de vitrification mis en oeuvre, une fois le pot métallique rempli de verre fondu, soit le verre est coulé dans un conteneur dans lequel il est refroidi, et le procédé est dénommé procédé « creuset chaud », soit le pot métallique est sorti du four pour être ensuite refroidi et servir de conteneur pour le verre final, et le procédé est alors dénommé procédé « in can melting ». Dans la présente nous nous intéresserons plus particulièrement à ce dernier type de procédé.

### ÉTAT DE LA TECHNIQUE ANTÉRIEURE

Les verres de confinement qui sont actuellement élaborés industriellement, tels que les verres de confinement pour les déchets nucléaires ou les résidus d'incinération de déchets ménagers, sont le résultat d'études de formulation qui optimisent leur composition voire leur température d'élaboration dans la mesure où cette dernière n'est pas déjà fixée par des contraintes liées au procédé ou à la composition des verres.

Ces optimisations de composition et de température visent à obtenir une formulation de verre qui permette à la fois :
- de diminuer le volume des déchets une fois confinés,
- d'être compatible avec une élaboration dans des procédés industriels, notamment ceux disponibles actuellement,
- d'améliorer les qualités de confinement de la matrice de verre finale (durabilité chimique, tenue à l'irradiation, résistance à la lixiviation, etc.) en vue de son entreposage.

Ainsi, les procédés actuels de vitrification de déchets nucléaires tels que les produits de fission comprennent généralement deux étapes : une évaporation-calcination des solutions de produits de fission pour obtenir un calcinat, suivie de la vitrification du calcinat formé. L'étape d'évaporation-calcination peut-être réalisée par exemple dans un tube tournant chauffé par un four à résistances. Ce procédé est connu de l'homme du métier.

Un verre formateur, adjuvant de vitrification par exemple sous la forme d'une fritte de verre est ensuite ajouté au calcinat pour élaborer le verre de confinement. Par exemple à l'usine de La Hague, ce dernier est un verre borosilicaté, principalement constitué, à environ 80 %, de SiO₂ (silice), B₂O₃ (anhydride borique), Al₂O₃ (alumine) et Na₂O (oxyde de sodium).

Le document (US-A-3,365,578) décrit un procédé de confinement de déchets qui comprend l'introduction des déchets dans un pot en acier inoxydable, ainsi que l'addition d'oxydes en tant qu'adjuvants de vitrification. Cette composition est fondue pour former un verre. Un agent oxydant tel que Fe₂O₃ peut être ajouté mais seulement dans le cas où les adjuvants de vitrification contiennent un phosphate.

Dans les procédés de vitrification actuels, tel que celui décrit ci-dessus pour le confinement des déchets nucléaires, le rôle de l'adjuvant de vitrification, tel qu'une fritte de verre, est uniquement d'apporter les éléments qui permettent d'aboutir après mélange avec les déchets à leur confinement dans un verre présentant les propriétés voulues dont certaines ont été énumérées plus haut.

Dans le cas particulier des procédés de vitrification de déchets en pot métallique chaud, les interactions entre le verre en fusion et le pot métallique sont très fortes.

Les mesures mises en oeuvre jusqu'alors pour limiter les interactions chimiques avec le bain de verre, la corrosion du pot métallique, et la perte de son intégrité font appel à la combinaison de plusieurs actions, à savoir une température limitée du bain de verre, un temps de séjour du bain de verre dans le pot métallique chaud limité, et l'utilisation d'aciers spéciaux assurant une bonne tenue à la corrosion .

Ces mesures qui ont donc essentiellement pour but d'éviter la corrosion du pot métallique chauffé et de conserver l'intégrité de ce pot, sont en partie efficaces, cependant elles présentent l'inconvénient d'exiger l'utilisation de matériaux métalliques coûteux pour les pots de fusion, ce qui se répercute de manière négative sur le coût global du procédé, et de limiter les durées et les températures d'élaboration du verre d'élaboration du verre, ce qui réduit la gamme des verres qui peuvent être préparés et la gamme des déchets qui peuvent être traités.

Par ailleurs, lors de l'élaboration des verres en pots métalliques chauds, il peut se produire dans certaines configurations du procédé de vitrification des phénomènes inattendus et importants de volatilisation, de dégazage et de moussage, dont l'origine n'a pu jusqu'alors être élucidée et qui sont extrêmement préjudiciables au bon déroulement du procédé de vitrification, notamment dans le cas de la vitrification de déchets nucléaires radioactifs.

Par dégazage on entend généralement le départ du bain de verre d'éléments chimiques sous la forme de gaz.

Par moussage on entend généralement l'accumulation de bulles en surface du bain de verre fondu.

Le moussage peut aller jusqu'à des remontées de verre fondu au-delà du pot de fusion.

Le moussage est une conséquence possible du phénomène de dégazage dans le bain de verre.

Aucune solution n'a pu être trouvée jusqu'à présent à ces problèmes de volatilisation, dégazage et moussage.

En outre on observe souvent dans les procédés de vitrification de déchets en pots métalliques chauds la formation d'espèces métalliques ou de sulfures qui sont dispersés ou sédimentés dans le verre et dont la présence est très gênante.

Enfin le confinement de certains éléments tels que Cd est parfois empêché.

Il existe donc au vu de ce qui précède un besoin pour un procédé de confinement de déchets par vitrification dans un pot métallique chauffé, dans lequel les phénomènes de volatilisation, de dégazage et de moussage soient supprimés ou tout au moins limités.

Il existe en outre un besoin pour un procédé qui en outre puisse éventuellement permettre de limiter la corrosion du pot métallique et de supprimer la formation d'espèces métalliques ou de sulfures dispersés ou précipités dans le verre.

Il existe également un besoin pour un procédé qui conserve l'intégrité du pot métallique et qui permette un excellent confinement de tous les éléments et même d'éléments tels que Cd ou toute autre espèce métallique dont la forme réduite est volatile (par exemple Zn).

Il existe aussi un besoin pour un tel procédé de confinement de déchets par vitrification dans un pot métallique chauffé qui soit simple, fiable, d'un faible coût de fonctionnement et qui fasse appel à des matériaux facilement disponibles et d'un faible coût.

Le but de la présente invention est de fournir un procédé de confinement de déchets par vitrification dans un pot métallique chauffé qui réponde entre autres à ces besoins.

Le but de la présente invention est encore de fournir un procédé de confinement de déchets par vitrification dans un pot métallique chauffé qui ne présente pas les inconvénients, défauts, limitations et désavantages des procédés de confinement de déchets par vitrification dans un pot métallique chauffé de l'art antérieur notamment en matière de volatilisation, dégazage et moussage, et qui apporte une solution aux problèmes des procédés de l'art antérieur.

Le but de la présente invention est en particulier de remédier à des problèmes relatifs à l'utilisation en pot métallique "in can" qui sont notamment la corrosion et le moussage lié à la volatilisation d'espèces du bain de verre réduites par le pot de fusion.

### EXPOSÉ DE L'INVENTION

Ce but, et d'autres encore, sont atteints, conformément à l'invention, par un procédé de confinement d'un déchet contenant au moins une espèce chimique à confiner, tel que défini dans la revendication 1.

Les inventeurs ont identifié, ce qui n'avait jamais été réalisé jusqu'à présent, l'origine des problèmes de volatilisation et de moussage en pot métallique chauffé et ont apporté de manière surprenante une solution à ces problèmes en introduisant conformément à l'invention, un agent oxydant dans le pot métallique en plus des déchets et de l'adjuvant de vitrification.

Les inventeurs ont mis en évidence que les phénomènes de dégazage et de moussage provenaient en fait de la réduction, sous l'action du pot métallique, de certaines des espèces présentes dans le bain de verre fondu, cette réduction produisant des formes réduites volatiles à la température de travail du procédé.

Plus précisément, les formulations de verre sont à base d'oxydes et sont souvent de type silicates ou borosilicates. Parmi les éléments constitutifs des verres de déchet, nombreux sont ceux pouvant exister sous différents états d'oxydation : Fe³⁺/²⁺/⁰, Zn²⁺/Zn⁰, Cd²⁺/Cd, Cr⁶⁺/Cr³⁺/Cr²⁺/Cr⁰, S⁶⁺/⁴⁺/⁰/⁻², Ni²⁺/⁰, Mn³⁺/²⁺/⁰, Mo⁶⁺/⁵⁺/⁴⁺/³⁺/⁰, Cs⁺/Cs⁰... Ces éléments proviennent surtout du déchet mais peuvent aussi être inclus dans la formulation de verre par l'intermédiaire de l'adjuvant de vitrification si cela présente un intérêt. Les inventeurs ont constaté que le pot peut jouer le rôle d'un réducteur puissant du bain de verre et des éléments multivalents qu'il contient. A l'inverse, les éléments métalliques du pot métallique s'oxydent et diffusent dans le verre. Les phénomènes de réduction sont variables en fonction des temps de séjour à haute température, des températures mises en jeu, de la composition du verre et de la nature des métaux utilisés pour les pots métalliques.

Ainsi les inventeurs ont observé que des pressions partielles en oxygène très basses, de l'ordre de 10⁻⁹ atmosphère, peuvent être atteintes dans des verres d'oxydes au bout de quelques heures de fonctionnement à la température du procédé (1100°C). Dans ces conditions, de nombreux éléments ayant plusieurs états de valence peuvent se réduire, et donner des espèces volatiles.

En d'autres termes le dégazage et le moussage sont la conséquence de la volatilisation de certaines espèces du bain de verre fondu dont la forme réduite est volatile à la température de travail du procédé, par exemple voisine de 1100°C. C'est le cas par exemple du cadmium ou du zinc dont les températures d'ébullition des formes métalliques sont respectivement de 767°C et de 907°C, et d'autres espèces comme le césium.

Les inventeurs ont pu ainsi montrer que cette volatilisation pouvait avoir notamment deux conséquences néfastes à savoir :
- elle peut induire, comme on l'a déjà précisé, les phénomènes de dégazage et de moussage susmentionnés, qui sont extrêmement préjudiciables au bon déroulement du procédé de vitrification.
- elle empêche le confinement d'éléments, tels que le cadmium, du déchet que l'on veut immobiliser.

Rien ne pouvait laisser supposer que les problèmes de dégazage et de moussage pouvaient trouver leur origine dans la réduction intempestive de certaines espèces dans le bain de verre en fusion, ou fonte verrière se trouvant dans le pot.

Et en conséquence rien ne pouvait laisser non plus supposer que l'on pourrait apporter une solution aux problèmes de dégazage et de moussage en introduisant des agents oxydants dans le pot métallique chauffé, autrement dit dans le bain de verre en fusion ou fonte verrière se trouvant dans le pot métallique.

Sans vouloir être lié par aucune théorie, l'introduction dans le pot métallique chauffé d'un agent oxydant permet de contrecarrer quantitativement les réactions de réduction des éléments, tels que les éléments multivalents du verre, par le pot métallique.

De ce fait le procédé selon l'invention, grâce à l'introduction d'agents oxydants dans le pot métallique chauffé permet de manière surprenante :
- d'éviter totalement ou de limiter la volatilisation d'espèces volatiles se trouvant sous une forme réduite ;
- d'éviter totalement ou de limiter les phénomènes de dégazage et de moussage liés à la volatilisation de ces espèces.

En outre, et de manière étonnante il a été mis en évidence que l'introduction d'agents oxydants dans le pot permettait aussi, de surcroît :
- d'éviter totalement ou de limiter la formation d'espèces métalliques ou de sulfures dispersés ou sédimentés dans le verre final ;
- de limiter éventuellement la corrosion du pot de fusion, en choisissant un agent oxydant adapté tel que Fe₂O₃, cette limitation de la corrosion du pot de fusion allant de pair avec la limitation de la réduction du bain de verre par le pot métallique ;
- de conserver l'intégrité du pot métallique ;
- d'utiliser des matériaux métalliques moins couteux pour les pots de fusion grâce à la corrosion moindre occasionnée par le bain ;
- de réaliser des élaborations de verre sur des durées plus longues tout en évitant un phénomène de réduction rédhibitoire de la fonte verrière, ce qui permet d'envisager des procédés avec des phases d'attente longues, à savoir de quelques minutes (par exemple 2, 3, 5, 10) à quelques dizaines d'heures (par exemple 20, 30, 40, 50, 100 heures) à haute température (par exemple de l'ordre de 1100°C) ;
- de permettre le confinement d'espèces telles que le Cd qui était jusqu'alors problématique.

Le document FR-A-2 888 576 décrit, certes la diminution des phénomènes de moussage dans des verres fondus pour vitrifier des produits de fission, en utilisant en tant qu'adjuvant de vitrification une fritte réductrice mais le procédé mis en oeuvre dans ce document n'est pas spécifiquement un procédé de vitrification en pot métallique au sens de l'invention.

Les enseignements de ce document ne peuvent absolument pas être transposés à la vitrification en pot métallique chauffé. Le moussage évoqué dans ce document a une origine fondamentalement différente de celle révélée par les inventeurs pour la vitrification en pot métallique, à savoir le départ d'oxygène sous forme de bulles, lié à un milieu trop oxydant.

En d'autres termes, ce document ne concerne pas spécifiquement la vitrification en pot métallique, ni les problèmes spécifiques à ce procédé en pot métallique tels que la corrosion et le moussage lié à la volatilisation d'espèces du bain de verre réduites par le pot de fusion. Il ne mentionne, ni ne suggère aucune solution pour résoudre ces problèmes.

Le ou les agent(s) oxydant(s) est (sont) choisi(s) parmi les éléments multivalents oxydants.

Avantageusement le ou les agent(s) oxydant(s) est (sont) ainsi choisi(s) parmi les espèces multivalentes oxydantes (à un degré d'oxydation élevé) du fer, du chrome, du vanadium, de l'antimoine, du titane, de l'arsenic, du cérium, du manganèse, du chrome, du ruthénium, et leurs mélanges.

De préférence le ou les agent(s) oxydant(s) peut (peuvent) être choisi (s) parmi Fe³⁺, Ce⁴⁺, Mn⁴⁺, Sb⁵+, As⁵⁺, V⁵⁺, Ru⁴⁺, et leurs mélanges.

Avantageusement, le ou les agents oxydants tels que les espèces multivalentes oxydantes peut (peuvent) être sous la forme de leurs oxydes, ou de précurseurs de ces oxydes.

Avantageusement, le au moins un agent oxydant est un agent qui a un effet limitant sur la corrosion du pot métallique, tel que Fe₂O₃.

La concentration en agent(s) oxydant(s) exprimée en oxyde(s) dans la fonte verrière est généralement de 0,1 à 20% en masse, de préférence de 4 à 20% en masse, de préférence encore 5 à 15% en masse, mieux de 10 à 13% en masse de la masse de la fonte verrière.

Cette concentration dépend notamment de la nature de l'agent oxydant. La concentration en agent oxydant (concentration donnée pour un agent oxydant utilisé seul) peut ainsi être respectivement de 0,1% à 1% en masse pour Cr³⁺, exprimée en Cr₂O₃ ; de 1 à 15% en masse pour V⁵⁺, exprimée en V₂O₅ ; de 0, 5 à 7 ou 8% en masse pour Sb⁵⁺, exprimée en Sb₂O₅ ; de 1 à 15% en masse pour Ti⁴⁺, exprimée en TiO₂ ; de 0,5 à 7 ou 8% en masse pour As⁵⁺, exprimée en As₂O₅ ; de 0,5 à 10% en masse pour Ce⁴⁺, exprimée en CeO₂ ; de 0,1 à 2% en masse pour Mn⁴⁺, exprimée en MnO₂ ; et de 1 à 20%, de préférence de 1 à 15%, de préférence encore de 3 à 13%, mieux de 4 ou 5 à 13%, mieux encore de 10 à 13% en masse, et de préférence de 12 à 13% en masse, par exemple 12,6% en masse pour Fe³⁺, exprimée en Fe₂O₃.

Le au moins un agent oxydant peut être introduit sous la forme d'une poudre constituée de préférence d'un mélange de poudres d'oxydes et/ou l'agent oxydant peut être introduit sous la forme d'un verre incluant cet élément, agent oxydant, par exemple sous la forme d'une fritte de verre, de billes de verre, ou de morceaux de verre.

Le au moins un agent oxydant peut être mélangé aux déchets préalablement à leur introduction dans le pot métallique.

Ou bien, l'agent oxydant peut être mélangé ou incorporé chimiquement à l'adjuvant de vitrification préalablement à leur introduction dans le pot métallique.

Ou bien l'agent oxydant peut être introduit directement dans le pot métallique, séparément des déchets et de l'adjuvant de vitrification.

On peut combiner deux ou plus desdits modes d'introduction pour l'agent oxydant.

L'agent oxydant peut être introduit de manière continue dans le pot métallique, ou bien l'agent oxydant peut être introduit de manière discontinue dans le pot métallique.

Le pot métallique est en un alliage à base de fer tel qu'un acier par exemple un acier inoxydable ou en un alliage à base de nickel tel qu'un inconel.

L'adjuvant de vitrification peut se présenter sous la forme d'un mélange de poudres d'oxydes ou sous la forme d'un verre par exemple d'une fritte de verre, de billes de verre ou de morceaux de verre.

L'adjuvant de vitrification consiste en des oxydes choisis dans le groupe constitué par les oxydes suivants SiO₂(silice), B₂O₃ (anhydride borique), Al₂O₃ (alumine), Na₂O (oxyde de sodium), Fe₂O₃, CaO, Li₂O, ZnO, et ZrO₂.

Avantageusement, l'adjuvant de vitrification peut être un verre borosilicaté ou un verre silicaté.

La ou les espèce(s) chimique(s) à confiner est (sont) choisie(s) parmi les éléments chimiques suivants : Al, As, B, Ba, Ca, Ce, Cd, Cr, Cs, F, Fe, Gd, Hg, Li, Mg, Mn, Mo, Na, Ni, Nd, P, Pb, S, Sb, Tc, Ti, V, Zn, Zr, les actinides tels que Pu, les platinoïdes, les isotopes, notamment radioactifs, de ceux-ci, et leurs mélanges.

Le déchet traité par le procédé selon l'invention peut être solide ou liquide.

Ce déchet peut être notamment un déchet nucléaire solide ou liquide.

Le déchet nucléaire peut être en particulier un effluent liquide radioactif tel qu'une solution radioactive.

Ou bien, le déchet nucléaire peut être un calcinat d'un effluent liquide radioactif, notamment de moyenne activité.

Le déchet peut aussi être un déchet issu de l'incinération de déchets radioactifs ou de déchets ménagers.

La fonte verrière peut être coulée dans un conteneur et refroidie dans celui-ci, ou bien la fonte verrière peut être refroidie dans le pot métallique où elle a été préparée.

L'invention va maintenant être décrite de manière détaillée dans la description qui suit, donnée à titre illustratif et non limitatif, en référence au dessin joint.

### BRÈVE DESCRIPTION DU DESSIN

La Figure unique est une vue schématique en coupe verticale d'un dispositif pour la mise en oeuvre du procédé selon l'invention.

### EXPOSÉ DÉTAILLÉ DE MODES DE RÉALISATION PARTICULIERS

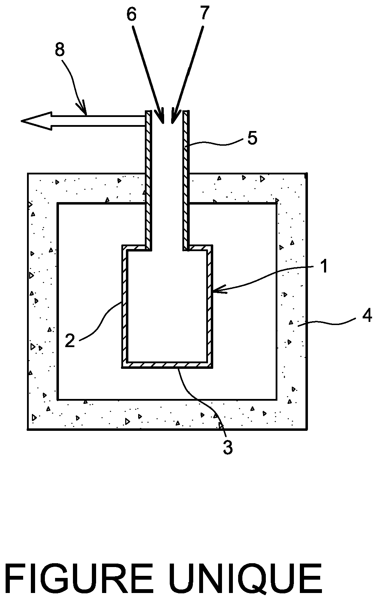

Sur la figure 1, on a représenté un pot, conteneur métallique (1) pour la mise en oeuvre du procédé selon l'invention.

Ce pot a généralement la forme d'un cylindre droit, vertical, de section circulaire ouvert à sa partie supérieure et comprenant une paroi latérale (2) et une base (3).

Ce pot a généralement un diamètre de 100 mm à 1000 mm et une hauteur de 100 mm à 1100 mm et peut avoir un volume de 1 à 250 L.

La paroi et la base du pot métallique sont généralement en un métal ou en un alliage métallique, et selon l'invention en un alliage à base de fer, par exemple un acier inoxydable ou en un alliage à base de nickel, tel qu'un inconel.

Ce métal ou alliage peut, selon les cas, être revêtu.

Un des avantages du procédé selon l'invention est qu'il permet d'utiliser des métaux et alliages courants, ne présentant pas une résistance particulière à la corrosion et moins onéreux tels que les aciers inoxydables, notamment les aciers des nuances 309, 310 ou 314, alors que dans les procédés de l'art antérieur sans addition d'agents oxydants dans la fonte verrière il est généralement nécessaire d'utiliser des métaux et alliages présentant une résistance élevée à la corrosion tels que des alliages corroyés à base de nickel comme les inconels par exemple de type 600 ou 601..., et des aciers spéciaux tels que les aciers « ODS » à dispersion d'oxydes.

Bien évidemment, on peut aussi utiliser selon l'invention ces métaux et alliages présentant une résistance élevée à la corrosion.

Le chauffage du pot métallique est généralement réalisé en plaçant le pot dans un four (4) à induction moyenne fréquence par exemple un four à induction avec un générateur de 200 kW de puissance fonctionnant à une fréquence de 4 kHz. Le verre à l'intérieur du pot métallique est alors fondu par conduction au contact de la paroi métallique.

Le pot peut également être chauffé dans un four à résistances électriques.

Le chauffage est réalisé à fusion, c'est-à-dire qu'il doit permettre de former un bain de fusion ou fonte verrière. La température du bain de fusion doit être assez élevée pour entraîner la fusion totale de l'adjuvant de vitrification, et de l'agent oxydant et pour réaliser l'incorporation des déchets à confiner. Cette température est fonction de l'adjuvant de vitrification, de l'agent oxydant et des déchets à confiner.

Lorsque l'adjuvant de vitrification est une fritte de verre borosilicatée, le chauffage du mélange fritte de verre, agent oxydant et déchets peut être réalisé généralement à une température de 900 à 1300°C, par exemple à 1100°C ou 1200°C.

L'adjuvant de vitrification est introduit dans le pot métallique par l'intermédiaire d'une canalisation (5) reliée à la partie supérieure du pot métallique.

Cet adjuvant de vitrification (6) est généralement choisi parmi les mélanges de poudres d'oxydes, et de préférence parmi les verres, mais aussi parmi les précurseurs de verre tels que les carbonates, nitrates, oxydes, borures, nitrures, carbures, métaux, sulfates, sulfures, hydroxydes, etc. et les mélanges de ceux-ci.

Lorsqu'on utilise du verre, il peut être sous différentes formes : il peut s'agir par exemple de paillettes encore appelées « fritte de verre », de billes, voire de morceaux de verre.

Avantageusement, l'adjuvant de vitrification, par exemple la fritte de verre ou ses précurseurs, peut être sous une forme physico-chimique telle que celles couramment utilisées pour apporter le verre de confinement dans un des procédés connus de confinement de déchets par vitrification de l'art antérieur.

Sa composition dépend bien entendu de l'objectif recherché dans la mise en oeuvre du procédé de vitrification de l'invention, en particulier de la matière, des espèces, éléments à confiner.

L'adjuvant de vitrification utilisé tel qu'une fritte de verre consiste en des oxydes choisis parmi les oxydes suivants : SiO₂ (silice), B₂O₃ (anhydride borique), Al₂O₃ (alumine), Na₂O (oxyde de sodium), Fe₂O₃, CaO, Li₂O, ZnO, et ZrO₂.

L'adjuvant de vitrification peut être notamment un verre borosilicaté ou un verre silicaté.

Par exemple lorsque l'adjuvant de vitrification tel qu'une fritte de verre est destiné au confinement d'une matière telle qu'un déchet comprenant des radionucléides et/ou métalloïdes et/ou métaux, l'adjuvant de vitrification, tel qu'une fritte de verre est de préférence un verre silicaté. Il peut s'agir par exemple d'un verre par exemple sous la forme d'une fritte de verre comprenant principalement environ 80% de SiO₂ (silice), B₂O₃ (anhydride borique), Al₂O₃ (alumine) et Na₂O (oxyde de sodium). Il peut s'agir plus particulérement d'une fritte de verre comprenant de 20 à 80% ou de 20 à 75% en masse de SiO₂ ; de 0 à 40% ou de 0 à 25% en masse de B₂O₃ ; de 0 à 20% de Fe₂O₃ ; de 0 à 25% en masse de Na₂O ; de 0 à 25% ou de 0 à 20% en masse de Al₂O₃ ; de 0 à 20% ou de 0 à 15% en masse de CaO ; de 0 à 20% ou de 0 à 10% en masse de Li₂O ; de 0 à 20% en masse de ZnO ; et de 0 à 20% ou de 0 à 15% en masse de ZrO₂.

En tant que verre borosilicaté on peut citer le verre dit « R7T7 » qui est très utilisé pour la vitrification des produits de fission et dont la composition est connue.

D'autres adjuvants de vitrification connus de l'homme du métier et adaptés pour le confinement de déchets spécifiques peuvent bien entendu être utilisés dans le cadre de la présente invention.

Selon l'invention, on introduit dans le pot métallique (1) le déchet (7) contenant le ou les éléments chimiques à confiner. Ce déchet est sur la figure unique introduit dans le pot métallique par l'intermédiaire de la même canalisation (5) mais il pourrait être introduit par une voie différente, séparée. En outre, l'introduction du déchet et l'introduction de l'adjuvant de vitrification peuvent être simultanée ou successives.

Le ou les éléments, espèces, à confiner est (sont) choisi(e)(s) parmi les éléments chimiques suivants Al, As, B, Ba, Ca, Ce, Cd, Co, Cr, Cs, F, Fe, Gd, Hg, La, Li, Mg, Mn, Mo, Na, Ni, Nd, P, Pb, S, Sb, Tc, Te, Ti, V, Zn, Zr, les actinides tels que Pu, les platinoïdes, les isotopes, notamment radioactifs, de ceux-ci, et leurs mélanges.

Le déchet peut être sous une forme solide ou liquide par exemple sous la forme d'une solution.

Le procédé selon l'invention s'applique en particulier aux déchets nucléaires solides ou liquides.

Ces déchets nucléaires peuvent par exemple se présenter sous la forme d'effluents liquides radioactifs, notamment d'effluents liquides radioactifs de moyenne activité, par exemple de solutions aqueuses.

Ces effluents liquides radioactifs peuvent être des effluents aqueux nitriques contenant des nitrates de métaux ou de métalloïdes.

Dans le cas où le déchet nucléaire est un déchet solide, il peut s'agir notamment d'un calcinat d'un effluent liquide radioactif notamment de moyenne activité. L'étape de calcination est généralement effectuée dans un tube tournant chauffé par exemple à 400 °C par un four électrique. Le calcinat solide est broyé par une barre folle placée à l'intérieur du tube tournant chauffé à la température voulue. Un adjuvant de dilution ou adjuvant de calcination, peut être ajouté.

Le déchet traité par le procédé de l'invention peut aussi être un déchet issu de l'incinération de déchets radioactifs ou ménagers.

Conformément à l'invention on introduit en outre, c'est-à-dire en plus du déchet et de l'adjuvant de vitrification, au moins un agent oxydant dans le pot métallique.

L'agent oxydant peut être choisi parmi les nitrates et les sulfates associés à un cation qui peut lui-même avoir une action oxydante ou non.

Ainsi, dans le cas du nitrate de fer, il est difficile de déterminer si l'oxydant est l'oxyde de fer issu de la décomposition du nitrate ou le nitrate de fer lui-même. En ce décomposant le nitrate de fer donne de l'oxyde de fer et des Noₓ et il apparaîtrait qu'il se produit un effet synergique entre ces deux composés qui accroît leurs effets respectifs notamment oxydants et « dope » leurs avantages.

Dans le cas du nitrate d'aluminium, par contre, seule l'entité nitrate a un rôle oxydant.

Les nitrates ou les sulfates, une fois portés à haute température oxydent le bain de verre, la fonte verrière et lui permettent de contrecarrer les réactions de réduction des éléments multivalents de la fonte verrière par le pot métallique.

Le ou les agent(s) oxydant(s) est (sont) choisi(s) parmi les éléments multivalents oxydants.

Ainsi ce ou ces agent(s) oxydant(s) peut (peuvent) être choisi(s) parmi les espèces multivalentes oxydantes du fer, du chrome, du vanadium, de l'antimoine, du titane, de l'arsenic, du cérium, du manganèse, du chrome, de ruthénium, et leurs mélanges.

Par espèce multivalente oxydante on entend généralement une espèce multivalente de degré d'oxydation élevé à savoir généralement supérieur ou égal à 2, et pouvant aller jusqu'à 6, par exemple égal à 2, 3, 4, 5 ou 6. Dans un couple rédox d'un même élément, l'espèce multivalente oxyde a le degré d'oxydation le plus élevé, par exemple dans le couple redox Fe(III) / Fe(II) c'est l'espèce Fe(III) qui sera mise en oeuvre dans le procédé selon l'invention.

De manière préférée le ou les agent(s) oxydant (s) est (sont) choisi (s) parmi Fe³⁺, Ce⁴⁺, Mn⁴⁺, V⁵⁺, Sb⁵⁺, As⁵⁺, Ru⁴⁺, et leurs mélanges.

Le ou les agents oxydants tels que les espèces multivalentes oxydantes mentionnées ci-dessus peut (peuvent) être amené(s) sous une forme chimique, comme par exemple sous la forme d'oxydes de ces espèces ou de précurseurs de ces oxydes tels que des nitrates ou sulfates. La fonction nitrate ou sulfate a un rôle oxydant mais il est difficile de déterminer si la fonction nitrate a un rôle oxydant supérieur ou non à la fonction oxyde.

Il est avantageux d'introduire les agents oxydants sous la forme d'oxydes (ou de précurseurs de ces oxydes) par exemple d'oxydes d'éléments pris dans un état d'oxydation élevé tels que Fe³⁺, Ce⁴⁺, Mn⁴⁺, ou V⁵⁺, car une fois qu'elles sont introduites dans le pot de fusion, ces oxydes ou leurs précurseurs s'incorporent au verre et réalisent avec celui-ci des réactions d'oxydation qui contrecarrent les réactions de réduction générées par les éléments métalliques du pot. Contrairement aux oxydants introduits sous la forme de nitrates ou de sulfates, les oxydants introduits sous la forme d'oxydes ne provoquent pas de dégazages qu'il faut gérer ensuite lors du traitement des gaz.

Enfin, l'agent oxydant peut aussi être choisi parmi les agents oxydants n'entrant pas dans la composition du verre final car disparaissant totalement à la température de fusion de la fonte verrière, au cours de l'élaboration du verre ou du confinement. Ces derniers sont par exemple l'acide nitrique, etc.

De préférence, selon l'invention l'agent oxydant est un agent qui a un effet limitant sur la corrosion du pot métallique tel que Fe₂O₃.

Il est très étonnant et totalement inattendu que certains agents oxydant puissent avoir un tel effet limitant, voire même supprimant la corrosion du pot. Cet effet limitant la corrosion du pot dû à l'agent oxydant et notamment à certains agents oxydants particuliers a été mis en évidence par les inventeurs et rien ne pouvait le laisser prévoir.

Dans cette forme de réalisation particulièrement avantageuse le procédé selon l'invention évite non seulement les phénomènes de dégazage et de moussage mais prévient également la corrosion du pot chaud.

L'agent oxydant peut être introduit dans le pot métallique sous toute forme appropriée.

Ainsi, l'agent oxydant, en particulier lorsqu'il s'agit d'un oxyde, peut être introduit sous la forme d'une poudre par exemple d'une poudre constituée d'un mélange d'oxydes.

L'agent oxydant peut aussi être introduit sous la forme d'un verre et notamment d'une fritte de verre.

L'agent oxydant peut être mélangé aux déchets préalablement à leur introduction dans le pot métallique et/ou l'agent oxydant peut être mélangé aux adjuvants de vitrification préalablement à leur introduction dans le pot métallique et/ou l'agent oxydant peut être introduit directement dans le pot métallique, séparément des déchets et des adjuvants de vitrification.

Par exemple, l'agent oxydant, s'il s'agit d'un oxyde ou d'un précurseur d'un oxyde, peut être incorporé chimiquement, préalablement à son introduction dans le pot, dans l'adjuvant de vitrification qui est sous la forme d'un verre, notamment sous la forme d'une fritte de verre.

En d'autres termes, dans la mesure où les adjuvants de vitrification sont apportés sous forme de verre, notamment de paillettes de verre, le ou les agents oxydants peuvent être incorporés à ce verre de l'adjuvant pour lui conférer un pouvoir oxydant.

L'agent oxydant peut être introduit de manière continue dans le pot métallique, ou bien l'agent oxydant peut être introduit de manière discontinue dans le pot métallique. Il en est de même des adjuvants de vitrification et des déchets. L'introduction de l'agent oxydant, des déchets et des adjuvants de vitrification peut se faire en une seule fois ou en plusieurs fois.

La nature des agents oxydants, tels que les éléments multivalents oxydants, et leur teneur sont à déterminer en fonction :
- de la composition du déchet,
- des espèces chimiques à confiner,
- de la capacité de la formulation de verre à accepter l'incorporation des espèces oxydantes,
- du mode d'addition, d'introduction des adjuvants de vitrification (fritte de verre, mélange de poudres ...),
- du niveau d'oxydation auquel on souhaite conserver le verre fondu,
- de l'ampleur des réactions de réduction que l'on souhaite contrecarrer entre le creuset métallique et le bain de verre, qui dépend elle-même de la nature du pot métallique, du temps de séjour du verre à haute température dans le pot métallique, de la température à laquelle est porté le vitrifiat pendant son élaboration, et de la composition du verre ,
- de son impact sur la corrosion du pot de fusion.

Il est possible de déterminer empiriquement pour chaque déchet la nature et la quantité d'agent oxydant à mettre en oeuvre.

On a indiqué plus haut des plages de concentration avantageuse pour le ou les agent(s) oxydant(s) et pour certains agents oxydants particuliers.

Le déchet, l'agent oxydant, l'adjuvant de vitrification peuvent être introduits dans le pot métallique dans un ordre quelconque, successivement ; ils peuvent être introduits en un même point (par exemple par la canalisation 5) ou en des points différents ; et deux parmi eux ou tous trois peuvent être introduits simultanément dans le réacteur par la même voie ou par des voies différentes.

On a déjà indiqué plus haut que l'un des avantages du procédé selon l'invention, du fait qu'il permet d'éviter les phénomènes de réduction et de corrosion du pot, était de permettre l'élaboration de verres sur des durées plus longues, avec des phases d'attente longues à haute température.

Ainsi le procédé selon l'invention pourrat-il avoir une durée globale par exemple de 20 à 120 heures avec des phases d'attente ou phases de maintien à température élevée par exemple à de 900 à 1200°C d'une durée de quelques minutes (par exemple 2, 5, 10 minutes) à quelques dizaines d'heures (par exemple 20, 30, 50, 100 heures).

Par exemple le procédé selon l'invention pourra comporter de 2 à 5 phases d'alimentation d'une durée de 4 à 12 heures chacune suivie d'une phase d'attente, maintien, à température élevée de la fonte verrière, chacune d'une durée de 10 à 14 heures.

Le procédé selon l'invention est totalement adaptable, complètement variable en ce qui concerne sa durée globale, ainsi que la nature, le nombre, la durée, les conditions des diverses phases.

La fonte verrière peut être coulée dans un conteneur différent du pot métallique et refroidie dans celui-ci, ou bien la fonte verrière est refroidie dans le pot métallique (« in can melting »).

Il est à noter enfin que le dispositif représenté sur la figure unique comporte une canalisation (8) pour évacuer les gaz depuis le pot métallique et les acheminer vers une installation de traitement des gaz (non représentée).

L'invention va maintenant être décrite en référence aux exemples suivants, donnés à titre illustratif et non limitatif.

### EXEMPLES

Dans les exemples qui suivent, on réalise la vitrification de déchets en pots métalliques (« in can melting ») dans une installation sensiblement conforme au schéma de la figure 1.

Il est à noter que l'on se limite dans ces exemples à l'étude de la seule étape de vitrification dans le pot, conteneur métallique, sans effectuer l'étape ultérieure de refroidissement.

Le pot, conteneur métallique utilisé dans tous les exemples a un volume d'environ 50 litres.

Il est chauffé à 1100°C par des résistances.

Le pot métallique est alimenté en continu pendant les phases d'alimentation chacune d'environ 12 heures, par un mélange de déchets et d'adjuvants de vitrification.

Les déchets se présentent sous la forme d'une solution aqueuse nitrique contenant les espèces chimiques à confiner. Ces espèces sont Li, S, Zr, F, Na (à raison de 50% en masse de la solution), Cd (à raison de 15% en masse de la solution), Fe, Ca, Cr, Al, Mg, Nd et Zn (à raison de 10% en masse de la solution).

La solution de déchets est alimentée à un débit d'environ 5 L/h.

Les adjuvants de vitrification, qui sont destinés à apporter les oxydes complémentaires aux oxydes des déchets, pour aboutir à la composition de verre finale, sont amenés dans les exemples sous la forme de paillettes de verre appelée « fritte de verre » à un débit de l'ordre de 2,5 Kg /h.

Une des particularités des essais réalisés dans les exemples qui suivent est l'alternance entre des phases d'alimentation en continu de 12 heures et des phases de veille avec maintien en température d'environ 12 heures. Ces deux phases sont alternées jusqu'à ce que le pot soit rempli d'environ 110 Kg de verre.

Un fois refroidi, le pot est désolidarisé du reste du procédé.

Dans les exemples qui suivent la solution de déchets a toujours la même composition, telle que définie plus haut, et le même débit.

On utilise par contre des pots métalliques fabriqués avec des aciers de différentes natures et des adjuvants de vitrification différents, c'est-à-dire des adjuvants de vitrification sans apport d'adjuvant oxydant ou bien avec apport de divers adjuvants oxydants de natures différentes.

On estime pour chaque exemple la réduction du verre par l'intermédiaire de la mesure de la pression en oxygène dans le verre fondu à 1100°C à l'aide d'un système électrochimique tel qu'un four « Rapidox^{®} » vendu par « Glass-Service^{®} ».

On observe pour chaque exemple les phénomènes de moussage, de dégazage, de formation de particules métalliques et de billes de sulfures, ainsi que la corrosion du pot métallique.

### EXEMPLE 1

Cet exemple est un exemple non conforme à l'invention dans lequel on ne réalise aucun apport d'adjuvants oxydants dans l'adjuvant de vitrification.

La solution de déchets a la composition précisée ci-dessus ;

Dans cet exemple le pot est un pot en Acier Inox 316L.

L'adjuvant de vitrification est constitué uniquement des oxydes suivants, en pourcentage en masse, sans aucun apport d'adjuvant oxydant : SiO₂ 62,5%, B₂O₃ 19, 5% ; Li₂O 1, 89% ; ZrO₂ 3,42% ; Na₂O 7,59% ; Al₂O₃ 3,51%.

La pression en oxygène mesurée est de 10⁻¹⁰ atmosphère.

Le cadmium s'est partiellement volatilisé. En effet, la teneur en cadmium analysée dans le verre est de 1,52 % massique contre 2,67% attendus.

Au cours de l'élaboration du verre, des phénomènes de moussage et un entraînement de matière importants sont nettement observés dans le système de traitement des gaz du procédé et ces gaz contiennent du cadmium.

Par ailleurs, une corrosion importante du pot et la présence de billes de sulfures est observée.

### EXEMPLE 2

Cet exemple est un exemple conforme à l'invention, dans lequel on réalise un apport d'adjuvants oxydants dans l'adjuvant de vitrification.

La solution de déchets est la même que celle de l'exemple 1.

Dans cet exemple le pot est un pot en acier inox 310 (NS30).

On utilise comme adjuvant de vitrification une fritte contenant 3% en masse de fer majoritairement au degré d'oxydation +III qui lui confère un pouvoir légèrement oxydant.

L'oxyde de fer est ajouté à la fritte dans le but de donner des propriétés acceptables au matériau pour son élaboration dans le procédé.

En d'autres termes l'adjuvant de vitrification contient 3% en masse de Fe₂O₃ en tant qu'agent oxydant et l'on vise une préparation de 3,6% en masse de Fe₂O₃ dans la fonte verrière, car une partie du Fe₂O₃ provient du déchet.

La composition massique de la fritte de verre qui constitue l'adjuvant de vitrification est donc la suivante : SiO₂ 60%, B₂O₃ 19% ; Li₂O 2% ; ZrO₂ 2% ; Na₂O 7% ; Fe₂O₃ 3% ; CaO 2% ; Al₂O₃ 3% ; Nd₂O₃ 2%.

La pression en oxygène remonte à 10^{-9,3} atmosphère.

Le verre est légèrement plus oxydé que dans l'exemple 1, ce qui a pour conséquence de limiter les phénomènes de réduction du cadmium à l'état métallique et de diminuer par conséquent les phénomènes de dégazage par rapport à l'exemple 1.

Une corrosion du pot significative comparable à celle de l'exemple 1 est notée.

On n'observe pas la présence de billes de sulfures ni de particules métalliques.

### EXEMPLE 3

Cet exemple est un exemple conforme à l'invention, dans lequel on réalise un apport d'adjuvants oxydants dans la solution de déchets.

La solution de déchets est la même que celle des exemples 1 et 2.

Le pot et la fritte de verre constituant l'adjuvant de vitrification sont les mêmes que ceux utilisés dans l'exemple 2, sauf que l'on ajoute en outre de l'oxyde de fer III supplémentaire à raison de 9% dans la solution de déchets de sorte que le verre final contient 12,6% massiques d'oxyde de fer Fe₂O₃ (soit 9% + 3,6%).

La pression en oxygène dans le verre final est considérablement accrue par rapport aux exemples 1 et 2 puisqu'elle est de 10^{-3,1} atmosphère.

A ce niveau de pression en oxygène, le cadmium est totalement oxydé et ne provoque plus de dégazage.

On n'observe plus de billes de sulfures sédimentées, ni de particules métalliques.

Par ailleurs le pot métallique est peu corrodé.

Ces exemples confirment l'avantage apporté lors de la vitrification de déchets dans des procédés en pot métallique chaud et en particulier « in can melter », par l'ajout d'éléments oxydants qui évitent notamment les phénomènes de moussage et de volatilité et les formations de particules métalliques. Ces exemples montrent aussi que l'ajout d'éléments oxydants pour contrecarrer la réduction du bain de verre par le pot chaud peut être rendu encore plus pertinent si les éléments oxydants ont une action limitant la corrosion du pot chaud.

## Revendications

1. Procédé de confinement d'un déchet contenant au moins une espèce chimique à confiner, par vitrification dans un pot métallique chauffé, dans lequel on introduit les déchets et un adjuvant de vitrification dans le pot métallique, on réalise la fusion du déchet et de l'adjuvant de vitrification pour obtenir une fonte verrière, et on refroidit la fonte verrière, **caractérisé en ce que** l'on introduit en outre au moins un agent oxydant dans le pot métallique ; **en ce que** la concentration en agent(s) oxydant(s) exprimée en oxyde(s) dans la fonte verrière est de 0,1 à 20% en masse, de préférence de 4 à 20% en masse, de préférence encore de 5 à 15% en masse, mieux de 10 à 13% en masse de la masse de la fonte verrière ; **en ce que** le ou les agent(s) oxydant(s) est (sont) choisi(s) parmi les éléments multivalents oxydants ; **en ce que** le pot métallique est en un alliage à base de fer ou en un alliage à base de nickel ; **en ce que** l'adjuvant de vitrification consiste en des oxydes choisis dans le groupe constitué par les oxydes suivants : SiO₂ (silice), B₂O₃ (anhydride borique), Al₂O₃ (alumine), Na₂O (oxyde de sodium), Fe₂O₃, CaO, Li₂O, ZnO, et ZrO₂ ; et **en ce que** la ou les espèce (s) chimique (s) à confiner est(sont) choisie(s) parmi les éléments chimiques suivants Al, As, B, Ba, Ca, Ce, Cd, Cr, Cs, F, Fe, Gd, Hg, Li, Mg, Mn, Mo, Na, Ni, Nd, P, Pb, S, Sb, Tc, Ti, V, Zn, Zr, les actinides tels que Pu, les platinoïdes, les isotopes, notamment radioactifs, de ceux-ci, et leurs mélanges.

2. Procédé selon la revendication 1 dans lequel le ou les agent(s) oxydant(s) est (sont) choisis parmi les espèces multivalentes oxydantes du fer, du chrome, du vanadium, de l'antimoine, du titane, de l'arsenic, du cérium, du manganèse, du chrome, du ruthénium, et leurs mélanges ; de préférence encore le ou les agent(s) oxydant(s) est (sont) choisi(s) parmi Fe³⁺, Ce⁴⁺, Mn⁴⁺, Sb⁵⁺, As⁵⁺, V⁵⁺, Ru⁴⁺, et leurs mélanges.

3. Procédé selon l'une quelconque des revendications 1 et 2, dans lequel le ou les agents oxydant(s) est (sont) sous la forme de leurs oxydes, ou de précurseurs de ces oxydes.

4. Procédé selon l'une quelconque des revendications précédentes dans lequel l'agent oxydant est un agent qui a un effet limitant sur la corrosion du pot métallique, tel que Fe₂O₃.

5. Procédé selon la revendication 1 dans lequel la concentration en agent oxydant, pour un agent oxydant utilisé seul, est respectivement de 0,1% à 1% en masse pour Cr³⁺, exprimée en Cr₂O₃ ; de 1 à 15% en masse pour V⁵⁺, exprimée en V₂O₅ ; de 0,5 à 7 ou 8% en masse pour Sb⁵⁺, exprimée en Sb₂O₅ ; de 1 à 15% en masse pour Ti⁴⁺, exprimée en TiO₂ ; de 0, 5 à 7 ou 8% en masse pour As⁵⁺, exprimée en As₂O₅ ; de 0,5 à 10% en masse pour Ce⁴⁺, exprimée en CeO₂ ; de 0,1 à 2% en masse pour Mn⁴⁺, exprimée en MnO₂ ; et de 1 à 20%, de préférence de 1 à 15%, de préférence encore de 3 à 13%, mieux de 4 ou 5 à 13%, mieux encore de 10 à 13% en masse, et de préférence de 12 à 13% en masse, par exemple 12,6% en masse pour Fe³⁺, exprimée en Fe₂O₃.

6. Procédé selon l'une quelconque des revendications précédentes dans lequel l'agent oxydant est introduit sous la forme d'une poudre, constituée de préférence d'un mélange de poudres d'oxydes ; ou bien l'agent oxydant est introduit sous la forme d'un verre, par exemple d'une fritte de verre, de billes de verre, ou de morceaux de verre.

7. Procédé selon l'une quelconque des revendications précédentes dans lequel l'agent oxydant est mélangé aux déchets préalablement à leur introduction dans le pot métallique ; et/ou l'agent oxydant est mélangé à l'adjuvant de vitrification préalablement à son introduction dans le pot métallique.

8. Procédé selon l'une quelconque des revendications précédentes dans lequel l'agent oxydant est introduit directement dans le pot métallique, séparément des déchets et de l'adjuvant de vitrification.

9. Procédé selon l'une quelconque des revendications précédentes dans lequel l'agent oxydant est introduit de manière continue ou discontinue dans le pot métallique.

10. Procédé selon l'une quelconque des revendications précédentes dans lequel l'adjuvant de vitrification se présente sous la forme d'un mélange de poudres d'oxydes ou sous la forme d'un verre, par exemple d'une fritte de verre, de billes de verre ou de morceaux de verre.

11. Procédé selon l'une quelconque des revendications précédentes dans lequel l'adjuvant de vitrification est un verre borosilicaté ou un verre silicaté.

12. Procédé selon l'une quelconque des revendications précédentes dans lequel le déchet est un déchet nucléaire solide ou liquide, par exemple un effluent liquide radioactif tel qu'une solution radioactive, ou un calcinat d'un effluent liquide radioactif notamment de moyenne activité.

13. Procédé selon l'une quelconque des revendications 1 à 11 dans lequel le déchet est un déchet issu de l'incinération de déchets radioactifs ou ménagers.

14. Procédé selon l'une quelconque des revendications précédentes dans lequel la fonte verrière est coulée dans un conteneur et refroidie dans celui-ci ; ou bien la fonte verrière est refroidie dans le pot métallique dans lequel elle a été élaborée.

## Patentansprüche

1. Verfahren zur Umhüllung eines mindestens eine zu umhüllende chemische Spezies enthaltenden Abfalls durch Verglasung in einem erhitzten Metalltopf, bei dem man die Abfälle und einen Verglasungszusatzstoff in den Metalltopf hineingibt, man das Verschmelzen des Abfalls und des Verglasungszusatzstoffes realisiert, um eine Glasschmelze zu erhalten, und man die Glasschmelze abkühlt, **dadurch gekennzeichnet, dass** man in den Metalltopf außerdem mindestens ein Oxidationsmittel hineingibt; dadurch, dass die in Oxid(en) ausgedrückte Konzentration an Oxidationsmittel(n) in der Glasschmelze 0,1 bis 20 Massen%, bevorzugt 4 bis 20 Massen%, noch bevorzugter 5 bis 15 Massen%, besser 10 bis 13 Massen% der Masse der Glasschmelze beträgt; dadurch, dass das oder die Oxidationsmittel ausgewählt wird (werden) unter den oxidierenden multivalenten Elementen ; dadurch, dass der Metalltopf aus einer Legierung auf der Basis von Eisen oder aus einer Legierung auf der Basis von Nickel ist; dadurch, dass der Verglasungszusatzstoff aus Oxiden, ausgewählt aus der durch folgende Oxide gebildeten Gruppe besteht : SiO₂ (Siliciumdioxid), B₂O₃ (Boranhydrid), Al₂O₃ (Aluminiumoxid), Na₂O (Natriumoxid), Fe₂O₃, CaO, Li₂O, ZnO, und ZrO₂; und dadurch, dass die zu umhüllende(n) chemische(n) Spezie(s) ausgewählt wird (werden) unter den folgenden chemischen Elementen Al, As, B, Ba, Ca, Ce, Cd, Cr, Cs, F, Fe, Gd, Hg, Li, Mg, Mn, Mo, Na, Ni, Nd, P, Pb, S, Sb, Tc, Ti, V, Zn, Zr, den Aktiniden wie etwa Pu, den Platinoiden, den Isotopen, insbesondere den radioaktiven Isotopen von diesen, und ihren Mischungen.

2. Verfahren nach Anspruch 1, bei dem das oder die Oxidationsmittel ausgewählt wird (werden) unter den oxidierenden multivalenten Spezies des Eisens, des Chroms, des Vanadiums, des Antimons, des Titans, des Arsens, des Ceriums, des Mangans, des Chroms, des Rutheniums, und ihren Mischungen ; noch vorteilhafter wird (werden) das (die) Oxidationsmittel ausgewählt unter Fe³⁺, Ce⁴⁺, Mn⁴⁺, Sb⁵⁺, As⁵⁺, V⁵⁺, Ru⁴⁺, und ihren Mischungen.

3. Verfahren nach einem der Ansprüche 1 und 2, bei dem das oder die Oxidationsmittel in ihrem Oxidzustand oder in dem Zustand von Präkursoren dieser Oxide sind.

4. Verfahren nach einem der vorhergehenden Ansprüche, bei dem das Oxidationsmittel ein Mittel wie etwa Fe₂O₃ ist, das auf die Korrosion des Metalltopfes eine begrenzende Wirkung hat.

5. Verfahren nach Anspruch 1, bei dem die Oxidationsmittel-Konzentration für ein allein benutztes Oxidationsmittel jeweils beträgt: von 0,1 bis 1 Massen% für Cr³⁺, ausgedrückt in Cr₂O₃ ; von 1 bis 15 Massen% für V⁵⁺, ausgedrückt in V₂O₅ ; von 0,5 bis 7 oder 8 Massen% für Sb⁵⁺, ausgedrückt in Sb₂O₅ ; von 1 bis 15 Massen% für Ti⁴⁺, ausgedrückt in TiO₂ ; von 0,5 bis 7 oder 8 Massen% für As⁵⁺, ausgedrückt in As₂O₅ ; von 0,5 bis 10 Massen% für Ce⁴⁺, ausgedrückt in CeO₂ ; von 0,1 bis 2 Massen% für Mn⁴⁺, ausgedrückt in MnO₂ ; und von 1 bis 20 Massen%, bevorzugt von 1 bis 15 Massen%, noch bevorzugter von 3 bis 13 Massen%, besser von 4 oder 5 bis 13 Massen%, noch besser von 10 bis 13 Massen%, und vorzugsweise von 12 bis 13 Massen%, zum Beispiel 12,6 Massen% für Fe³⁺, ausgedrückt in Fe₂O₃.

6. Verfahren nach einem der vorhergehenden Ansprüche, bei dem das Oxidationsmittel in Form eines Pulvers beigegeben wird, vorzugsweise bestehend aus einer Mischung von Oxidpulvern ; oder das Oxidationsmittel auch in Form von einem Glas, zum Beispiel einer Glasfritte, Glaskugeln oder Glasstücken, beigegeben wird.

7. Verfahren nach einem der vorhergehenden Ansprüche, bei dem das Oxidationsmittel vor dem Hineingeben der Abfällen in den Metalltopf mit den Abfällen gemischt wird ; und/oder das Oxidationsmittel vor dem Hineingeben des Verglasungszusatzstoff in den Metalltopf mit dem Verglasungszusatzstoff gemischt wird.

8. Verfahren nach einem der vorhergehenden Ansprüche, bei dem das Oxidationsmittel direkt in den Metalltopf hineingegeben wird, getrennt von den Abfällen und dem Verglasungszusatzstoff.

9. Verfahren nach einem der vorhergehenden Ansprüche, bei dem das Oxidationsmittel in kontinuierlicher oder diskontinuierlicher Weise in den Metalltopf hineingegeben wird.

10. Verfahren nach einem der vorhergehenden Ansprüche, bei dem der Verglasungszusatzstoff sich in Form einer Mischung von Oxidpulveren oder in Form von Glas, zum Beispiel einer Glasfritte, Glaskugeln oder Glasstücken, präsentiert.

11. Verfahren nach einem der vorhergehenden Ansprüche, bei dem der Verglasungszusatzstoff ein Borosilikatglas oder ein Silikatglas ist.

12. Verfahren nach einem der vorhergehenden Ansprüche, bei dem der Abfall ein fester oder flüssiger Nuklearabfall ist, zum Beispiel ein radioaktiver Flüssigabfall wie etwa eine radioaktive Lösung, oder ein Kalzinat eines radioaktiven Flüssigabfalls, insbesondere von mittlerer Aktivität.

13. Verfahren nach einem der Ansprüche 1 bis 11, bei dem der Abfall ein aus der Verbrennung von radioaktiven Abfällen oder Haushaltsabfällen stammender Abfall ist.

14. Verfahren nach einem der vorhergehenden Ansprüche, bei dem die Glasschmelze in einen Behälter gegossen und in diesem abgekühlt wird ; oder die Glasschmelze auch in dem Metalltopf abgekühlt wird, in dem sie hergestellt worden ist.

## Claims

1. Process for confining a waste containing at least one chemical species to be confined, by vitrification in a heated metal can, wherein the waste and a vitrification additive are fed into the metal can, the waste and the vitrification additive are melted to obtain a glass melt, and the glass melt is cooled, **characterised in that** at least one oxidising agent is further fed into the metal can; **in that** the concentration of oxidising agent(s) expressed as oxide(s) in the glass melt is from 0.1 to 20% by mass, preferably from 4 to 20% by mass, more preferably from 5 to 15% by mass, and even more preferably from 10 to 13% by mass of the mass of the glass melt; **in that** the oxidising agent(s) is (are) chosen from among multivalent oxidising agents; **in that** the metal can is made from an iron-based alloy or a nickel-based alloy; **in that** the vitrification additive consists of oxides chosen from the group consisting of the following oxides: SiO₂(silica), B₂O₃ (boric oxide), Al₂O₃ (alumina), Na₂O (sodium oxide), Fe₂O₃, CaO, Li₂O, ZnO, and ZrO₂; and **in that** the chemical specie(s) to be confined is (are) chosen from among the following chemical elements: Al, As, B, Ba, Ca, Ce, Cd, Cr, Cs, F, Fe, Gd, Hg, Li, Mg, Mn, Mo, Na, Ni, Nd, P, Pb, S, Sb, Tc, Ti, V, Zn, Zr, actinides such as Pu, platinoids, their isotopes, particularly their radioactive isotopes, and mixtures thereof.

2. Process according to claim 1, wherein the oxidising agent(s) is (are) chosen from among multivalent oxidising species of iron, chromium, vanadium, antimony, titanium, arsenic, cerium, manganese, chromium, ruthenium and mixtures thereof; more preferably the oxidising agent(s) is (are) chosen from among Fe³⁺, Ce⁴⁺, Mn⁴⁺, Sb⁵⁺, As⁵⁺, V⁵⁺, Ru⁴⁺, and mixtures thereof.

3. Process according to any one of claims 1 and 2, wherein the oxidising agent(s) is (are) in the form of their oxides, or precursors of these oxides.

4. Process according to any one of the preceding claims, wherein the oxidising agent is an agent, such as Fe₂O₃, that has a limiting effect on the corrosion of the metal can.

5. Process according to claim 1, wherein the concentration of the oxidising agent, for an oxidising agent used alone, is respectively from 0.1% to 1% by mass for Cr³⁺, expressed as Cr₂O₃; from 1 to 15% by mass for V⁵⁺, expressed as V₂O₅; from 0.5 to 7 or 8% by mass for Sb⁵⁺, expressed as Sb₂O₅; from 1 to 15% by mass for Ti⁴⁺, expressed as TiO₂; from 0.5 to 7 or 8% by mass for As⁵⁺, expressed as As₂O₅; from 0.5 to 10% by mass for Ce⁴⁺, expressed as CeO₂; from 0.1 to 2% by mass for Mn⁴⁺, expressed as MnO₂; and from 1 to 20%, preferably from 1 to 15%, more preferably from 3 to 13%, better from 4 or 5 to 13%, still better from 10 to 13% by mass, and preferably from 12 to 13% by mass, for example 12.6% by mass for Fe³⁺, expressed as Fe₂O₃.

6. Process according to any one of the preceding claims, wherein the oxidising agent is added in the form of a powder consisting preferably of a mixture of oxide powders; or the oxidising agent is added in the form of a glass, for example a glass frit, glass beads or glass pieces.

7. Process according to any one of the preceding claims, wherein the oxidising agent is mixed with the waste before the waste is fed into the metal can; and/or the oxidising agent is mixed with the vitrification additive before the vitrification additive is fed into the metal can.

8. Process according to any one of the preceding claims, wherein the oxidising agent is fed directly into the metal can, separately from the waste and the vitrification additive.

9. Process according to any one of the preceding claims, wherein the oxidising agent is fed into the metal can continuously or discontinuously.

10. Process according to any one of the preceding claims, wherein the vitrification additive is in the form of a mixture of oxide powders or is in the form of a glass, for example a glass frit, glass beads or glass pieces.

11. Process according to any one of the preceding claims, wherein the vitrification additive is a borosilicate glass or a silicate glass.

12. Process according to any one of the preceding claims, wherein the waste is a solid or liquid nuclear waste, for example a radioactive liquid effluent such as a radioactive solution; or a cullet of a radioactive liquid effluent, particularly a medium activity effluent.

13. Process according to any one of claims 1 to 11, wherein the waste is a waste derived from the incineration of radioactive waste or household waste.

14. Process according to any one of the preceding claims, wherein the glass melt is poured into a container and cooled in said container; or the glass melt is cooled in the metal can in which it was prepared.
